Europäisches Patentamt

(19) European Patent Office

Office européen des brevets

(11) **EP 0 546 776 B1**

(12) **EUROPEAN PATENT SPECIFICATION**

(45) Date of publication and mention
of the grant of the patent:
**30.07.1997 Bulletin 1997/31**

(51) Int. Cl.$^6$: **B25J 9/16**

(21) Application number: **92311102.5**

(22) Date of filing: **04.12.1992**

(54) **Method of Orientating Axes of a Robot Wrist having an Offset**

Verfahren zur Orientierung von Achsen einer Roboterhand mit Versatz

Méthode pour orienter les axes d'une articulation de robot dés- axée

(84) Designated Contracting States:
**DE GB**

(30) Priority: **07.12.1991 KR 2240891**

(43) Date of publication of application:
**16.06.1993 Bulletin 1993/24**

(73) Proprietors:
• **POHANG IRON & STEEL CO., LTD.**
**Pohang City, Kyong Sang Book-Do 790-300 (KR)**
• **RESEARCH INSTITUTE OF INDUSTRIAL**
**SCIENCE & TECHNOLOGY**
**Pohang City, Kyong Sang Book-Do 790-330 (KR)**

(72) Inventors:
• **Lee, Kwang Sae**
**A-106, Woo Shin Apt.**
**Busan City (KR)**

• **Youm, Young II**
**6-905, Professor Apt.**
**Kyong Sang Book-Do (KR)**

(74) Representative: **Price, Paul Anthony King**
**D. Young & Co.,**
**21 New Fetter Lane**
**London EC4A 1DA (GB)**

(56) References cited:
EP-A- 0 383 951          US-A- 4 680 519
US-A- 4 823 279

• PATENT ABSTRACTS OF JAPAN vol. 12, no. 466
(M-772) 7 December 1988 & JP-A-63 192 575
(FANUC LTD) 9 August 1988
• INTERNATIONAL JOURNAL OF ROBOTICS
RESEARCH, vol.2, no.1, 1983, CAMBRIDGE MA
US pages 31 - 38 RICHARD P. PAUL & CHARLES
N. STEVENSON 'Kinematics of Robot Wrist'

## Description

The present invention relates to a method of orientating three rotational axes of articulation of a robot wrist as described in the preamble of claim 1 or 5, so that in preferred embodiments the robot wrist can orient arbitrarily at any position without regard to the location of the robot arm to which the robot wrist is connected.

DESCRIPTION OF THE PRIOR ART

In general, a robot needs six articulations in order for the end-effector of the robot to select a certain position and posture in the three-dimensional workspace. The aforementioned six articulations are composed of three articulations for selecting a position and of three articulations for selecting a posture. Of these, the part having three articulations for selecting a posture is referred to as the wrist. The wrist has to be constructed so that it can orient arbitrarily at that position without regard to the construction of the robot arm, when the aforementioned robot arm equipped with 3 degrees of freedom for determining a posture selected a certain position. Of the robot wrist manufactured up to now, there are two wrists; one is that the rotational axes of each articulation coincide at one point and the other is that the rotational axes of each articulation do not coincide at one point. As for the wrist having the rotational axes of the three articulations which coincide at one point, the fact that the scope in which the robot wrist can be oriented is restricted in accordance with the magnitude of the twist angle between the rotational axes, was publicly disclosed(R. P. Paul, "Kinematics of Robot Wrist, J. of Robotics Research, 1983). In order to eliminate such restriction, a method of determining twist angle between the rotational axes has been proposed. As for the wrist having rotational axes of the three articulations which do not coincide at one point, i.e. having an offset the fact that the scope in which the wrist cannot be oriented exists in accordance with the construction of said three articulations, was disclosed in U.S. Patent No. 4,823, 279, Unimation, Inc., Inventor: William Perzley, etc. describing the prior art according to the preambles of claims 1 and 5. However, a method of determining the twist angle between the rotational axes of three articulations having said rotational axes which do not coincide at one point, has not been disclosed yet. It depends only upon the method of determining the twist angle for robot wrist in which said rotational axes coincide at one point. In consequence, if attaching the wrist having the construction of an offset which kinematic parameters were determined in accordance with the existing method of determining Kinematic parameters, to the robot arm of an articulated type, the wrist cannot orient arbitrarily while it was originally intended to do.

The method of determining the twist angle between the rotational axes of three articulations constituting the conventional robot wrist will be explained in more detail as the following.

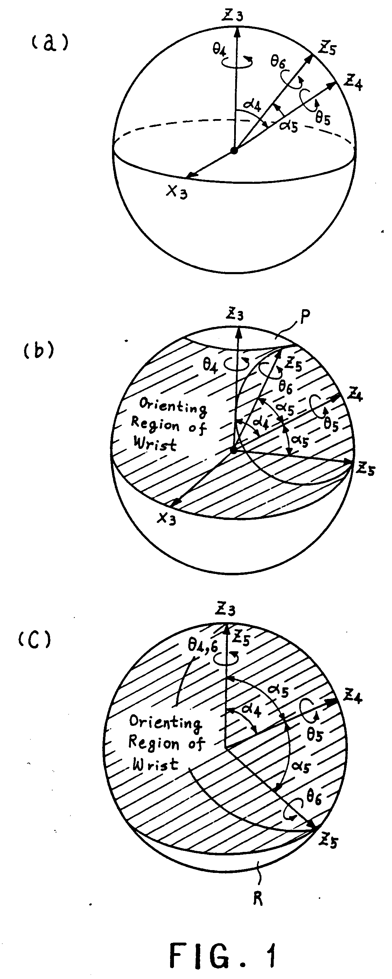

First, the construction of three articulations constituting the robot wrist is modeled mathematically as shown in Figure 1 a). In the drawing, as for each articulation, its own coordinate system is established and correlation of front articulation and rear articulation is represented as four each of kinematic parameters. The coordination system established in each articulation is the right-angled system having the constituents of X, Y and Z but Figure 1 a) shows only the axes of X and Z. Axis($Z_3$) is the rotational axis of the first articulation among three articulations constituting the wrist and represents the direction of the robot arm. Axis($Z_4$) and axis($Z_5$) are rotational axes of the remaining articulations and axis($Z_5$) expressly represents the wrist direction. Axis($X_3$) means X axis of a coordinate system established in the first articulation and under the initial state which each of the rotational axis was not rotated, axis($X_4$) and axis($X_5$) of the remaining articulations come to coincide to the X axis of the aforesaid first articulation. Of four kinematic parameters, the most important parameter of determining orienting region of the wrist is the twist angle between Z axes and is denoted by $\alpha$ in the drawing. Twist angle($\alpha_4$) is shown between axis($Z_3$) and axis($Z_4$), and twist angle($\alpha_5$) is shown between axes ($Z_4$) and ($Z_5$).

It is known up to now that when twist angle($\alpha_4$) and twist angle($\alpha_5$) have the different value from each other, an axis($Z_5$) cannot exist in a conical space region(cone)(P) formed around axis($Z_3$) if axis($Z_5$) rotates about axis($Z_4$) as shown in Figure 1 b)(R. P. Paul, "Kinematics of Robot Wrist", J. of Robotics Research, 1983). This means that when axis($Z_3$) is the direction of the robot arm and axis($Z_5$) is the wrist direction, there exists a certain space between axis($Z_3$) and axis($Z_5$) and thus the robot wrist cannot orient in this region. However, if twist angle($\alpha_4$) and twist angle($\alpha_5$) have the equal value from each other, the direction of the robot arm may coincide to the wrist direction and thus the wrist can orient arbitrarily in the region indicated with a slant line. Also, the region(R) which is not represented as a slant line in Figure 1 c) completely disappears if twist angle($\alpha_4$) and twist angle($\alpha_5$) become 90° respectively.

As the result, the technique of determining kinematic parameters for the robot wrist used up to date requires that twist angle($\alpha_4$) and twist angle($\alpha_5$) should have equal value and that each of the angle size becomes 90° respectively. As for most conventional robot wrist, such method of determining the parameters was used.

Meanwhile, the aforesaid method of determining kinematic parameters applies to the wrist with an offset having the construction in which the rotational axes do not coincide at one point. Especially if attaching the wrist having such construction, to the robot arm of an articulated type, original object thereof cannot be achieved.

Namely, as for such kind of robot, there exist some region in which the robot wrist cannot be oriented arbitrarily. Actually in the industrial fields, such kind of robot is used mostly but all of them have the drawbacks mentioned above.

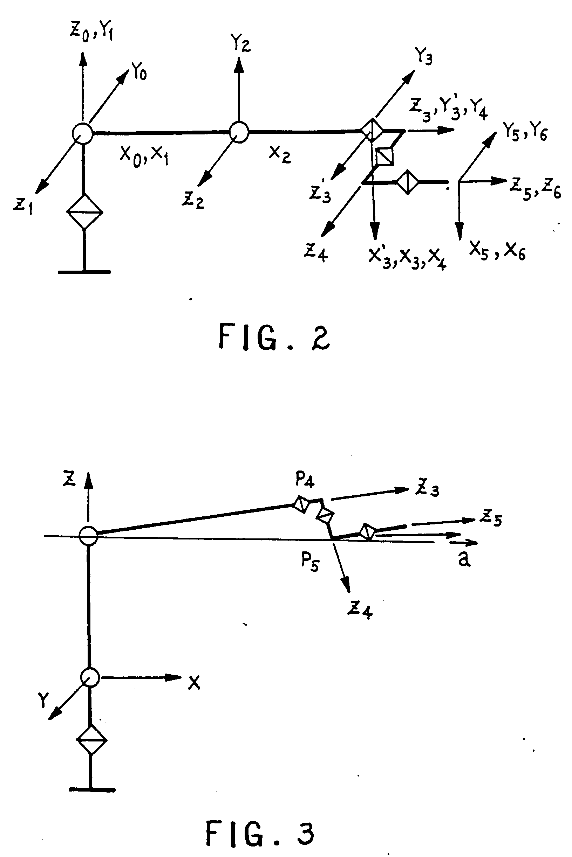

The problems of the robot being used at present will be explained in detail with reference to the accompanying drawings. Figure 2 shows a mathematically modeled robot with wrist in which the rotational axes of three articulations do not coincide at one point, which was attached to the arm of an articulated type. Kinematic parameters of said robot are shown in the following Table 1.

Table 1

| Articulation | $\alpha$ | a | d | $\theta$ |
|---|---|---|---|---|
| 1 | 90 | 0 | 0 | $\theta_1$ |
| 2 | 0 | $\ell_2$ | 0 | $\theta_2$ |
| 3' | 0 | $\ell_3$ | 0 | $\theta_3$ |
| 3 | -90 | 0 | 0 | -90 |
| 4 | 90 | 0 | 0 | $\theta_4$ |
| 5 | -90 | 0 | $d_5$ | $\theta_5$ |
| 6 | 0 | 0 | 0 | $\theta_6$ |

In the above Table 1, twist angle($\alpha_4$) and twist angle($\alpha_5$) of articulation(4) and articulation(5) are 90° respectively. These values are those determined according to the conventional method of determining kinematic parameters. The denotation (-) represents the case where the initial coordinate position is the opposite direction. With regard to a distance(d) between the rotational axes, it can be seen from the above Table that there exist a distance($d_5$) between articulation(4) and articulation(5). The value of this distance($d_5$) becomes 0 if the rotational axes of three articulations coincide at one point.

If the distance($d_5$) is 0, no problem arises in the conventional method of determining kinematic parameters. If it is not 0 as mentioned above, problems arise as the following.

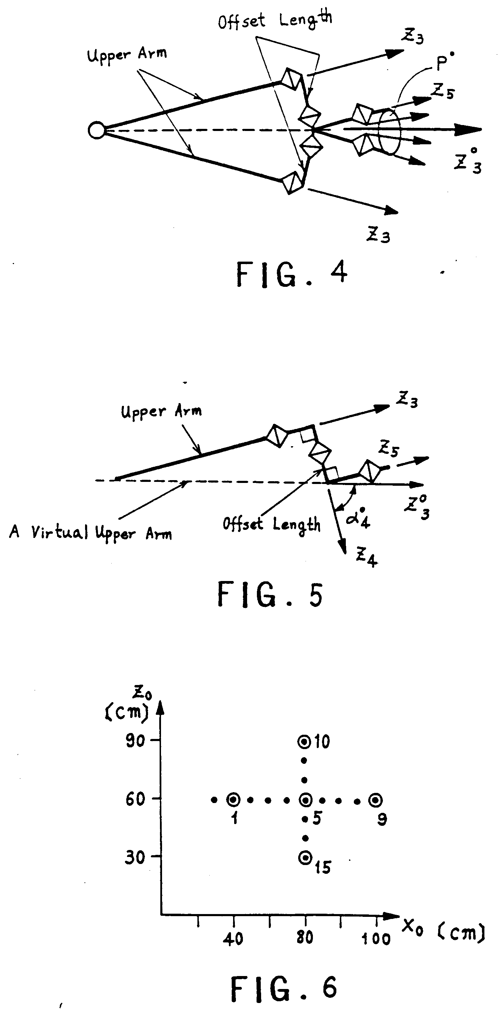

As shown in Figure 3, supposing that the robot should assume a posture of $\vec{a}$ at point($P_5$) in workspace, the robot should determine the posture of $\vec{a}$ positioning at point($P_5$) and by moving articulation(4) and articulation(5). However, axis($Z_5$) representing the wrist direction moves only outside the conical region($P^o$) and cannot reach inside the conical region($P^o$) as shown in Figure 4, even if said robot causes articulation(4) and articulation(5) to rotate. That is, the robot wrist cannot assume the posture of $\vec{a}$ in case there exist a virtual posture $\vec{a}$ within the aforesaid conical region($P^o$).

In conclusion, in case of the robot wrist having the rotational axes of three articulations which do not coincide at one point, there exist some region in which the robot wrist cannot be oriented at a virtual position in workspace even though twist angle($\alpha_4$) and twist angle($\alpha_5$) are equal and 90° according to the conventional method of determining kinematic parameters thereof. As the result, kinematic parameters, i.e. twist angles ($\alpha_4$) and ($\alpha_5$) should not be equal or 90° when attaching the wrist with an offset, to the robot arm of an articulated type.

SUMMARY OF THE INVENTION

Therefore, reasons for such problems were analyzed and then there were developed the methods of the present invention for orientating three rotational axes of articulation of a robot wrist. First, reasons for such problems are described below.

In case of the aforesaid robot, twist angle($\alpha_4$) of axis($Z_4$) to axis($Z_3$) was determined 90° at the time of determining kinematic parameters. When an offset in wrist was involved in determining a position, axis($Z_3$) representing the arm direction can be defined as new direction, axis($Z_3^o$) as shown in Figure 4. In case twist angle between axis($Z_3^o$) and axis($Z_4$) be $\alpha_4^o$, the value is not 90°(please refer to Figure 5).

Axis($Z_3^o$) herein is the direction connecting the third articulation to the end point of an offset link of wrist and the connection link between these two points is defined as a virtual robot upper arm. That is, the aforesaid conventional robot comprises the articulation of which the upper part length is

$$\ell_3^o \ (= \sqrt{\ell_3^2 + d_5^2}),$$

and has the similar kinematic characteristics to the robot with wrist having no offset in which twist angle($\alpha_4^o$) and twist angle($\alpha_5$) between the articulations constituting wrist are different from each other. Consequently, there always exist the region in which the robot wrist cannot be oriented.

EP 0 546 776 B1

Also, in case of the robot having the aforesaid construction, the size and the shape of the region in which the robot wrist cannot be oriented are not equal at the workpoint in all workspace. The computer simulation reflects this well and the results thereof are as follows. The values of kinematic parameters in the robot used in the computer simulation became; $\ell_2$=600mm, $\ell_3$=800mm, $d_5$=100mm in the above Table 1. Supposing one cross section in workspace in the simulation, it was investigated how the region in which the robot wrist cannot be oriented varies when the robot arm moved toward vertical or horizontal direction of the cross section.

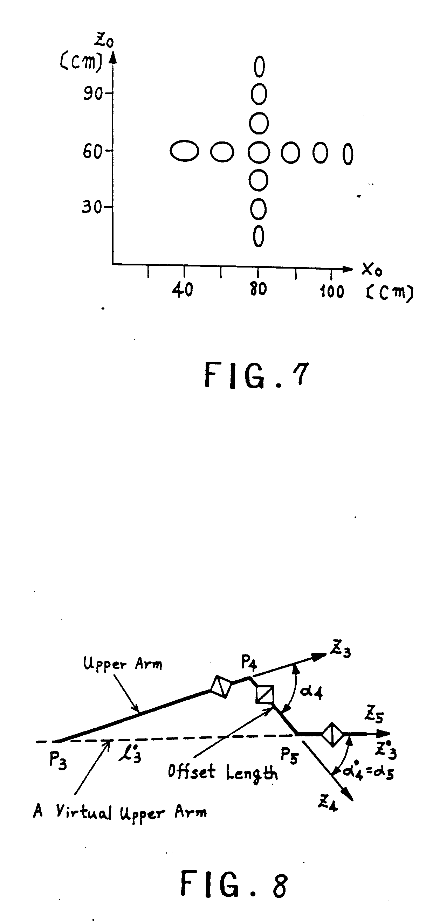

This section is a plane which workspace of the robot was cut toward the direction $X_0$, $Z_0$, in Figure 2, and when rotating this around axis $Z_0$, total workspace appears. The characteristics from the aforesaid plane are the same ones from the plane obtained by rotating this plane around the $Z_0$ axis. In order to see how the space in which the robot cannot be oriented at each point in the plane varies, several representing points were selected as shown in Figure 6 and the conical space in which the robot cannot be oriented at each point was drawn with size and shape of the base. As the result, shape variation of the space could be seen as shown in Figure 7 and by finding vertical angle and horizontal angle on the basis of the angular point of the conical space, there is shown the size of the space in Table 2. Figure 7 shows that the conical space shrinks horizontally as the robot stretches its arm on the basis of center of workplane and expand horizontally as the robot shrinks. Consequently, it can be seen that the size and the shape of the conical space which the robot cannot be oriented varies according to the location of the robot.

Table 2

(Unit:Deg)

| Position | Horizontal angle | Vertical angle |
|---|---|---|
| 1 | 28.4210 | 14.2500 |
| 2 | 22.9454 | 14.2500 |
| 3 | 19.1673 | 14.2500 |
| 4 | 16.4252 | 14.2500 |
| 5 | 14.2500 | 14.2500 |
| 6 | 12.7582 | 14.2500 |
| 7 | 11.4686 | 14.2500 |
| 8 | 10.3793 | 14.2500 |
| 9 | 9.3550 | 14.2500 |
| 10 | 13.1837 | 14.2500 |
| 11 | 13.7927 | 14.2500 |
| 12 | 14.1376 | 14.2500 |
| 13 | 13.7977 | 14.2500 |
| 14 | 13.2550 | 14.2500 |

As shown in Table 2, in case of the wrist with an offset, some region in which the robot cannot be arbitrarily oriented

4

appeared even when twist angles $(\alpha_4)$ and $(\alpha_5)$ are equal and the magnitude thereof is 90°. That is because that the wrist offset affected determination of the position and thus the new arm direction$(Z_3^o)$ was defined, and the twist angle$(\alpha_4^o)$ between axis$(Z_4)$ and axis$(Z_3^o)$ is not 90°.

Accordingly, it can be seen that when determining kinematic parameters of the robot wrist with an offset, one of kinematic parameters, i.e., the twist angles $(\alpha_4)$ and $(\alpha_5)$ must not be equal and the magnitude thereof not be 90°.

As the result of analyzing the reasons for problems, the present invention was conceived to reduce or eliminate such problems. An object of the present invention is to provide a method of orientating three rotational axes of articulation of a robot wrist with an offset with regard to setting the twist angles between the rotational axes so that, in preferred embodiments, the robot wrist can be oriented arbitrarily at any position without regard to the position of the robot arm to which the robot wrist is connected.

According to a first aspect of the present invention, there is provided a method of orientating three rotational axes of articulation of a robot wrist extending from the end of an upper arm of a robot and having an offset in which said three rotational axes of articulation do not coincide at one point, wherein $\alpha_4$ and $\alpha_5$ are twist angles between said three rotational axes of articulation, said method comprising: positioning two of said three rotational axes of articulation so that said twist angle $\alpha_4$ is within the range $0 \le |\alpha_4| \le 180°$; characterised in that said method further comprises:

determining a twist angle $\alpha_4^o$ by using the following formulas:

$$(\ell_3^o)^2 = (\ell_3)^2 + (d_5)^2 - 2 \times \ell_3 \times d_5 \times \cos(180° - \alpha_4)$$

$$\alpha_4^o = a\cos\left(\frac{(\ell_3^o)^2 + (d_5)^2 - (\ell_3)^2}{2 \times \ell_3^o \times d_5}\right)$$

wherein $\ell_3$ is the distance from a rotational axis of articulation of said robot upper arm to the beginning of said wrist offset, $d_5$ is the length of said wrist offset, and $0 \le \alpha_4^o \le 180°$; and

positioning the remaining one of said three rotational axes of articulation of said wrist so that the magnitude of said twist angle $\alpha_5$ is within the range $(2 \times \alpha_4^o - |\alpha_4|) < \alpha_5 < |\alpha_4|$ or $(180° - |\alpha_4|) < \alpha_5 < (180° - 2 \times \alpha_4^o + |\alpha_4|)$, wherein the signs of said twist angles $\alpha_4$ and $\alpha_5$ are in accordance with the directions of the initial coordinate system.

Preferably, the magnitude of the twist angle $\alpha_5$ is equal to the twist angle $\alpha_4^o$, or is equal to $180° - \alpha_4^o$.

Preferably, the magnitude of the twist angle $\alpha_4$ is 90°.

According to a second aspect of the present invention, there is provided a method of orientating three rotational axes of articulation of a robot wrist extending from the end of an upper arm of a robot and having an offset in which said three rotational axes of articulation do not coincide at one point, wherein $\alpha_4$ and $\alpha_5$ are twist angles between said three rotational axes of articulation, said method comprising: positioning two of said three rotational axes of articulation so that said twist angle $\alpha_5$ is within the range $0 \le |\alpha_5| \le 180°$; characterized in that said method further comprises:

determining a twist angle $\alpha_4^{oo}$ by using the following formulas:

$$(\ell_3)^2 = (\ell_3^o)^2 + (d_5)^2 - 2 \times \ell_3^o \times d_5 \times \cos(\alpha_5)$$

$$\alpha_4^{oo} = 180° - a\cos\left(\frac{(\ell_3)^2 + (d_5)^2 - (\ell_3^o)^2}{2 \times \ell_3 \times d_5}\right)$$

wherein $\ell_3^o$ is a virtual link length between a rotational axis of articulation of said robot upper arm and the end of said wrist offset, $d_5$ is the length of said wrist offset, and $0 \le \alpha_4^{oo} \le 180°$; and

positioning the remaining one of said three rotational axes of articulation of said wrist so that the magnitude of said twist angle $\alpha_4$ is within the range $|\alpha_5| < \alpha_4 \le \alpha_4^{oo}$ or $(180° - \alpha_4^{oo}) \le \alpha_4 < (180° - |\alpha_5|)$, wherein the signs of said twist angles $\alpha_4$ and $\alpha_5$ are in accordance with the directions of the initial coordinate system.

Preferably, the magnitude of the twist angle $\alpha_4$ is equal to the twist angle $\alpha_4^{oo}$, or is equal to $180° - \alpha_4^{oo}$.

With the preferred embodiments of the present invention, the robot wrist can orient arbitrarily at any position without regard to the position of the robot arm. For some embodiments, there may exist some space in which the robot wrist cannot be oriented, but this space is always smaller than that resulting from use of the conventional method.

Non-limiting embodiments of the present invention will now be described in conjunction with the accompanying drawings, in which:

Figures 1 a), b) and c) illustrate orienting region of the wrist having no offset and, more particularly,

Figure 1 a) is an initial coordinate system of wrist,

Figure 1 b) is a graph representing orienting region when $\alpha_4 \neq \alpha_5$, and

Figure 1 c) is a graph representing orienting region when $\alpha_4 = \alpha_5$.

Figure 2 is a schematic drawing representing robot model with wrist having an offset.

Figure 3 is a graph representing an example of wrist direction in which robot cannot orient.

Figure 4 is a drawing illustrating a space in which wrist cannot orient.

Figure 5 is a drawings illustrating twist angle ($\alpha_4^o$) of $Z_4$ to newly defined arm direction($Z_3^o$).

Figure 6 is a graph representing workpoint for the computer simulation.

Figure 7 is a drawing illustrating variation of the space in which wrist cannot orient.

Figure 8 is a drawing illustrating relations of parameters for determining kinematic parameters $\alpha_4$ and $\alpha_5$ according to the method of determining kinematic parameters of the present invention.

Figures 9 a), b), c) and d) are drawings illustrating variation of orienting region of wrist having an offset when $\alpha_4$ is 90° and when adjusting kinematic parameter $\alpha_5$.

Figure 10 a) and b) are drawings illustrating the reason why the conical space in which the base forms an ellipse type disappeared from Figures 9 b), c) and d).

## DETAILED DESCRIPTION OF PREFERRED EMBODIMENTS OF THE INVENTION

In Figure 8, the vector connecting point ($P_3$) and point ($P_5$) is defined as axis ($Z_3^o$). Point ($P_3$) is the beginning of the upper articulation link of the robot arm, point ($P_4$) is the beginning of the wrist offset and point ($P_5$) is the end of the wrist offset. The length from point ($P_3$) to point ($P_5$) is defined as a virtual length of the robot upper arm ($\ell_3^o$). When twist angle ($\alpha_4$) between axis ($Z_3$) and axis ($Z_4$) was determined a virtual angle in the robot wrist, the twist angle ($\alpha_5$) between axis ($Z_4$) and axis ($Z_5$) is determined to be equal to the twist angle ($\alpha_4^o$) between axis ($Z_3^o$) and axis ($Z_4$) or to be $\alpha_5 = 180° - \alpha_4^o$. The signs herein accord to the determined direction of the initial coordinate system.

In Figure 8, $\ell_3$ is the distance from point ($P_3$) to point ($P_4$) and $d_5$ is the length of the wrist offset.

A virtual robot arm length($\ell_3^o$) therein is as the following.

$$(\ell_3^o)^2 = (\ell_3)^2 + (d_5)^2 - 2 * \ell_3 * d_5 * \cos(180° - \alpha_4) \tag{1}$$

Also, the aforesaid twist angle($\alpha_4^o$) is found as the following.

$$\alpha_4^o = a\cos(\frac{(\ell_3^o)^2 + d_5^2 - \ell_3^2}{2 * \ell_3^o * d_5}) \tag{2}$$

As for twist angle($\alpha_5$) which is determined according to the aforesaid formulas (1) and (2), twist angle($\alpha_5$) is determined by the formulas (1) and (2) after twist angle($\alpha_4$) is determined a virtual value, but twist angle($\alpha_4$) can be determined after twist angle($\alpha_5$) is determined. If and when twist angle($\alpha_4$) is determined after twist angle($\alpha_5$) is determined, the procedures are carried out as the following.

If twist angle($\alpha_5$) was determined first a virtual value, point($P_3$), the end point of upper articulation link of robot arm, is fixed on the extension line of $Z_5$ vector as shown in Figure 8.

Then, a virtual link length($\ell_3^o$) connecting point($P_3$) to point($P_5$) is found as the following.

$$(\ell_3)^2 = (\ell_3^o)^2 + (d_5)^2 - 2 * \ell_3^o * d_5 * \cos(\alpha_5) \tag{3}$$

Then, twist angle($\alpha_4^{oo}$) is found by the following formula (4):

$$\alpha_4^{oo} = 180° - a\cos(\frac{(\ell_3)^2 + (d_5)^2 - (\ell_3^o)^2}{2 * \ell_3 * d_5}) \tag{4},$$

and the magnitude of twist angle($\alpha_4$) is determined to be equal to the twist angle($\alpha_4^{\circ\circ}$) and the signs thereof are determined at the time of establishing the initial coordinate system, or the magnitude of the aforesaid twist angle($\alpha_4$) become 180° - $\alpha_4^{\circ\circ}$ according to the direction of the initial coordinate system; the signs thereof are determined at the time of establishing the coordinate system.

By virtue of twist angle($\alpha_4$) and twist angle($\alpha_5$) determined according to the aforesaid method of determining kinematic parameters, the robot can orient arbitrarily at any positions.

As for the aforesaid results obtained by the method of determining kinematic parameters, the computer simulation was conducted. As an example, twist angle($\alpha_4$) was determined 90° in the simulation and twist angle($\alpha_5$) was calculated by the aforesaid formula(2) to be 82.875°. The final value of $\alpha_5$ according to the direction of determining the initial coordinate system becomes -82.875°.

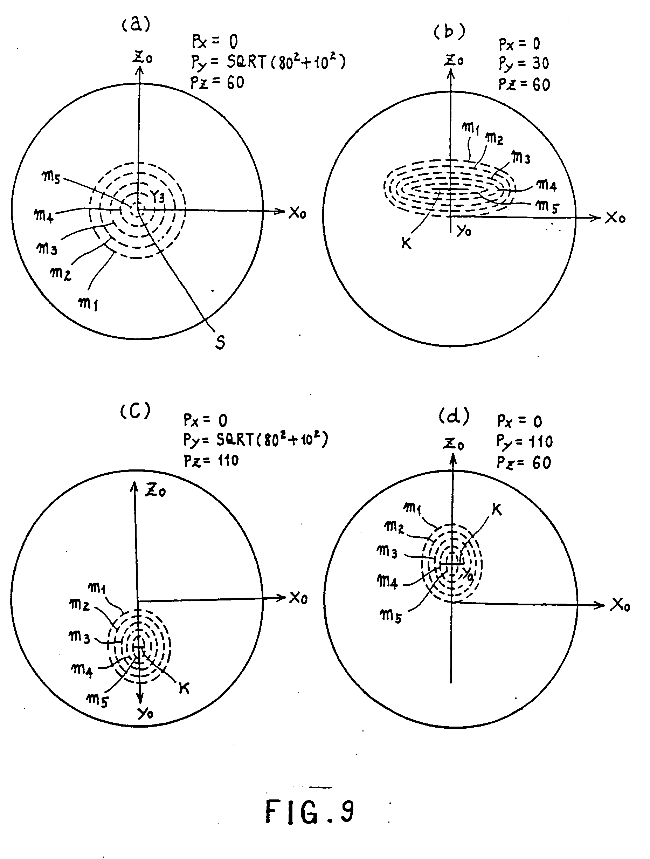

In case where the conventional method of determining kinematic parameters applied to the robot wrist having an offset, there existed some region in which the robot cannot be oriented arbitrarily. However, in case where twist angle($\alpha_4$) become 90° and twist angle($\alpha_5$) become -82.875° according to the present invention, the region in which the robot cannot be oriented completely disappears as shown in Figure 9. Figure 9 a) indicates the region in which the robot wrist cannot be oriented when the offset end point($P_5$) is at the same height as point($P_3$)(at position 5 of Figure 6) at the posture which the robot shown in Figure 2 erects lower arm vertically. The outmost circle(ml) of the circles indicated with a dot represents the region(a base of the conical space) in which the robot wrist cannot be oriented in case where kinematic parameters were determined($\alpha_4$ = 90°, $\alpha_5$ = -90°) according to the conventional method. And the innermost part indicated with a dot represents the region in which the robot wrist cannot be oriented when twist angle($\alpha_4$) was determined to be 90° and twist angle($\alpha_5$) to be -82.875°. The intermediate circles(m2, m3, m4, m5) represent the region in which the robot wrist cannot be oriented when twist angle($\alpha_4$) is 90° and twist angle($\alpha_5$) is determined within the range from - 90° according to the conventional method of determining kinematic parameters to -82.875° according to the present invention by gradually dividing into several phases.

It can be seen from the foregoing that the region in which the robot wrist cannot be oriented becomes smaller gradually as twist angle($\alpha_5$) is gradually reduced from -90° to -82.875°. And it can be seen that the region in which the robot wrist cannot be oriented completely disappeared in case where twist angle($\alpha_5$) was determined to be -82.875° finally.

In view of the aforesaid results, if the magnitude of the aforesaid twist angle($\alpha_5$) is determined within the range obtained by the following formula (5) with regard to ($\alpha_4^{\circ}$) determined by the formulas (1) and (2),

$$\alpha_4^{\circ} - (|\alpha_4| - \alpha_4^{\circ}) < \alpha_5 < |\alpha_4| \qquad (5)$$

the size of the space in which the robot wrist cannot be oriented becomes smaller than the size of the space formed by the existing method of determining parameters(twist angles ($\alpha_4$) and ($\alpha_5$) are equal).

The aforesaid formula (5) is expressed finally as the following formula (6).

$$(2 * \alpha_4^{\circ} - |\alpha_4|) < \alpha_5 < |\alpha_4| \qquad (6)$$

Also, for $Z_5$ vector of Figure 8, if the coordinate system is determined at 180° opposite direction initially, the range of the aforesaid formula(6) is expressed as the range of the following formula(7):

$$(180° - |\alpha_4|) < \alpha_5 < (180° - 2 * \alpha_4^{\circ} + |\alpha_4|) \qquad (7)$$

And when the aforesaid twist angle($\alpha_5$) is determined as a virtual value, magnitude of the twist angle($\alpha_4$) is determined $|\alpha_5| < \alpha_4 \leq \alpha_4^{\circ\circ}$ or $(180° - \alpha_4^{\circ\circ}) \leq \alpha_4 < (180° - |\alpha_5|)$, and the signs thereof are determined at the time of establishing the initial coordinate system.

Figures 9 b), c) and d) show how the region in which the robot wrist having an offset cannot be oriented at positions 1, 10 and 9 of Figure 6 varies in case where it was determined according to the conventional method of determining kinematic parameters and where determined according to the present invention.

One of the important facts can be found out from the results of the aforesaid simulation. That is, as for the conical space in which the robot wrist cannot be oriented, the size and the shape thereof vary according to the position of the robot in workspace. However, said space becomes one dot(s) and disappears when the base of the space becomes a complete circle as shown in Figure 9 a) if twist angle($\alpha_4$) and twist angle($\alpha_5$) are determined in such a manner as described in the formulas (1) and (2). And when the base of the aforesaid space is an ellipse as shown in Figures 9 b), c) and d), the space becomes a line(k) and disappears. This line means that the wrist direction($Z_5$) moves along the line if rotating $\theta_4$ in 0°-360° after determining the position of the robot. The reasons are as the following.

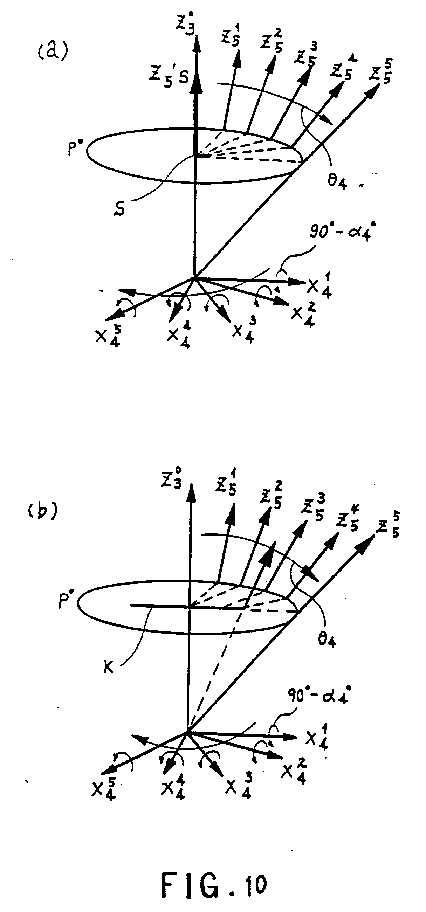

It is supposed in Figure 10 that $Z_3^{\circ}$ be the newly defined arm direction and $Z_5^1$, $Z_5^2$, $Z_5^3$ ..., $X_4^1$, $X_4^2$, $X_4^3$ ... be $Z_5$ and $X_4$ when $\alpha_4$ = 90°, $\alpha_5$ = -90°.

If rotating $\theta_4$ in 0°-360° after the position of the robot is determined at a point, $Z_5$ becomes $Z_5^1$, $Z_5^2$, $Z_5^3$ ...and $X_4$ becomes $X_4^1$, $X_4^2$, $X_4^3$ ... The link offset in the wrist herein affects $X_4$ and the track of $X_4$ moves onto a curved surface rather than onto a plane. As $\alpha_5$ is the value of determining the volumes for rotating $Z_5$ around $X_4$ vector, the existing $Z_5^1$, $Z_5^2$, $Z_5^3$ .... center on one dot or line when changing $\alpha_5$ from the existing -90° to -82.875° in accordance with the method proposed in the present invention. Figure 10 a) shows the shape that when the base of the conical space in which the robot wrist cannot be oriented is a complete circle, $Z_5$ vector centers on one dot and the space disappears. Figure 10 b) shows the shape that when the base of the conical space is an ellipse, $Z_5$ vector centers on one line and this space disappears.

Thus, the space in which the robot wrist cannot be oriented shrinks gradually as twist angle($\alpha_4$) is 90° and twist angle($\alpha_5$) is gradually reduced from the existing -90° to -82.875° obtained by the formulas (1) and (2). That is, after one of twist angle($\alpha_4$) and twist angle($\alpha_5$) is determined as a virtual value, if the other is determined to be more approximate to the value obtained by the formulas (1) and (2) or the formulas (3) and (4), the space in which the robot wrist cannot be oriented becomes smaller as compared with the existing method of determining kinematic parameters.

## Claims

1. A method of orientating three rotational axes ($Z_3$, $Z_4$, $Z_5$) of articulation of a robot wrist extending from the end of an upper arm of a robot and having an offset in which said three rotational axes ($Z_3$, $Z_4$, $Z_5$) of articulation do not coincide at one point, wherein $\alpha_4$ and $\alpha_5$ are twist angles between said three rotational axes ($Z_3$, $Z_4$, $Z_5$) of articulation, said method comprising:

   positioning two ($Z_3$, $Z_4$) of said three rotational axes of articulation so that said twist angle $\alpha_4$ is within the range $0 \leq |\alpha_4| \leq 180°$;
   characterised in that said method further comprises:

   determining a twist angle $\alpha_4^o$ by using the following formulas:

   $$(\ell_3^o)^2 = (\ell_3)^2 + (d_5)^2 - 2 \times \ell_3 \times d_5 \times \cos(180° - \alpha_4)$$

   $$\alpha_4^o = a\cos\left(\frac{(\ell_3^o)^2 + (d_5)^2 - (\ell_3)^2}{2 \times \ell_3^o \times d_5}\right)$$

   wherein $\ell_3$ is the distance from a rotational axis ($Z_2$) of articulation of said robot upper arm to the beginning ($P_4$) of said wrist offset, $d_5$ is the length of said wrist offset, and $0 \leq \alpha_4^o \leq 180°$; and
   positioning the remaining one ($Z_5$) of said three rotational axes of articulation of said wrist so that the magnitude of said twist angle $\alpha_5$ is within the range $(2 \times \alpha_4^o - |\alpha_4|) < \alpha_5 < |\alpha_4|$ or $(180° - |\alpha_4|) < \alpha_5 < (180° - 2 \times \alpha_4^o + |\alpha_4|)$, wherein the signs of said twist angles $\alpha_4$ and $\alpha_5$ are in accordance with the directions of the initial coordinate system.

2. The method according to claim 1, wherein the magnitude of said twist angle $\alpha_5$ is equal to said twist angle $\alpha_4^o$.

3. The method according to claim 1, wherein the magnitude of said twist angle $\alpha_5$ is equal to $180° - \alpha_4^o$.

4. The method according to any one of claims 1 to 3, wherein the magnitude of said twist angle $\alpha_4$ is 90°.

5. A method of orientating three rotational axes ($Z_3$, $Z_4$, $Z_5$) of articulation of a robot wrist extending from the end of an upper arm of a robot and having an offset in which said three rotational axes ($Z_3$, $Z_4$, $Z_5$) of articulation do not coincide at one point, wherein $\alpha_4$ and $\alpha_5$ are twist angles between said three rotational axes ($Z_3$, $Z_4$, $Z_5$) of articulation, said method comprising:

   positioning two ($Z_4$, $Z_5$) of said three rotational axes of articulation so that said twist angle $\alpha_5$ is within the range $0 \leq |\alpha_5| \leq 180°$;
   characterized in that said method further comprises:

   determining a twist angle $\alpha_4^{oo}$ by using the following formulas:

   $$(\ell_3)^2 = (\ell_3^o)^2 + (d_5)^2 - 2 \times \ell_3^o \times d_5 \times \cos(\alpha_5)$$

$$\alpha_4^{\,oo} = 180° - acos\left(\frac{(\ell_3)^2 + (d_5)^2 - (\ell_3^{\,o})^2}{2 \times \ell_3 \times d_5}\right)$$

wherein $\ell_3^{\,o}$ is a virtual link length between a rotational axis ($Z_2$) of articulation of said robot upper arm and the end ($P_5$) of said wrist offset, $d_5$ is the length of said wrist offset, and $0 \le \alpha_4^{\,oo} \le 180°$; and positioning the remaining one ($Z_3$) of said three rotational axes of articulation of said wrist so that the magnitude of said twist angle $\alpha_4$ is within the range $| \alpha_5 | < \alpha_4 \le \alpha_4^{\,oo}$ or $(180° - \alpha_4^{\,oo}) \le \alpha_4 < (180° - | \alpha_5 |)$, wherein the signs of said twist angles $\alpha_4$ and $\alpha_5$ are in accordance with the directions of the initial coordinate system.

6. The method according to claim 5, wherein the magnitude of said twist angle $\alpha_4$ is equal to said twist angle $\alpha_4^{\,oo}$.

7. The method according to claim 5, wherein the magnitude of said twist angle $\alpha_4$ is equal to $180° - \alpha_4^{\,oo}$.

## Patentansprüche

1. Verfahren zum Ausrichten dreier Drehachsen ($Z_3$, $Z_4$, $Z_5$) der Gelenkverbindung eines Robotergelenkes, welche sich vom Ende eines Oberarmes eines Roboters erstrecken und einen Versatz heben, in welchem die drei Drehachsen ($Z_3$, $Z_4$, $Z_5$) der Gelenkverbindung nicht an einem Punkt zusammenfallen, wobei $\alpha_4$ und $\alpha_5$ Verdrehwinkel sind zwischen den drei Drehachsen ($Z_3$, $Z_4$, $Z_5$) der Gelenkverbindung, wobei das Verfahren aufweist:

Positionieren zweier ($Z_3$, $Z_4$) der drei Drehachsen der Gelenkverbindung so, daß der Verdrehwinkel $\alpha_4$ im Bereich von $0 \le | \alpha_4 | \le 180°$ ist;
dadurch gekennzeichnet, daß das Verfahren ferner aufweist:

Bestimmen eines Verdrehwinkels $\alpha_4°$ durch Verwendung der folgenden Formeln:

$$(l_3^{\,\circ})^2 = (l_3)^2 + (d_5)^2 - 2 \times l_3 \times d_5 \times \cos(180° - \alpha_4)$$

$$\alpha_4^{\,\circ} = acos\left(\frac{(l_3^{\,o})^2 + (d_5)^2 - (l_3)^2}{2 \times l_3^{\,o} \times d_5}\right)$$

wobei $l_3$ der Abstand ist von einer Drehachse ($Z_2$) der Gelenkverbindung des Roboteroberarmes zum Beginn ($P_4$) des Gelenkversatzes, $d_5$ die Länge des Gelenkversatzes ist und $0 \le \alpha_4° \le 180°$; und

Positionieren der restlichen einen Achse ($Z_5$) der drei Drehachsen der Gelenkverbindung des Gelenkes so, daß die Größe des Verdrehwinkels $\alpha_5$ innerhalb des Bereiches $(2 \times \alpha_4° - |\alpha_4|) < \alpha_5 < | \alpha_4 |$ oder $(180° - | \alpha_4 |) < \alpha_5 < (180° - 2 \times \alpha_4° + | \alpha_4|)$ liegt, wobei die Vorzeichen der Verdrehwinkel $\alpha_4$ und $\alpha_5$ mit den Richtungen des anfänglichen Koordinatensystems in Übereinstimmung sind.

2. Verfahren nach Anspruch 1, wobei die Größe des Verdrehwinkels $\alpha_5$ gleich ist dem Verdrehwinkel $\alpha_4°$.

3. Verfahren nach Anspruch 1, wobei die Größe des Verdrehwinkels $\alpha_5$ gleich ist $180° - \alpha_4°$.

4. Verfahren nach einem der Ansprüche 1 bis 3, wobei die Größe des Verdrehwinkels $\alpha_4$ 90° beträgt.

5. Verfahren zum Ausrichten dreier Drehachsen ($Z_3$, $Z_4$, $Z_5$) der Gelenkverbindung eines Robotergelenkes, die sich von dem Ende eines Oberarmes eines Roboters erstrecken und einen Versatz haben, bei welchem die drei Drehachsen ($Z_3$, $Z_4$, $Z_5$) der Gelenkverbindung nicht an einem Punkt zusammenfallen, wobei $\alpha_4$ und $\alpha_5$ Verdrehwinkel zwischen den drei Drehachsen ($Z_3$, $Z_4$, $Z_5$) der Gelenkverbindung sind, wobei das Verfahren aufweist:

Positionieren zweier ($Z_4$, $Z_5$) der drei Drehachsen der Gelenkverbindung so, daß der Verdrehwinkel $\alpha_5$ innerhalb des Bereiches $0 \le | \alpha_5 | \le 180°$ liegt;
dadurch gekennzeichnet, daß das Verfahren ferner aufweist:

Bestimmen eines Verdrehwinkels $\alpha_4^{\,\infty}$ unter Verwendung der folgenden Formeln:

$$(l_3)^2 = (l_3^{\circ})^2 + (d_5)^2 - 2 \times l_3^{\circ} \times d_5 \times \cos(\alpha_5)$$

$$\alpha_4^{\infty} = 180° - acos\left(\frac{(l_3)^2 + (d_5)^2 - (l_3^{\circ})^2}{2 \times l_3 \times d_5}\right)$$

wobei $l_3°$ die Länge eines virtuellen Gelenkstückes zwischen einer Drehachse ($Z_2$) der Gelenkverbindung des Roboteroberarmes und dem Ende ($P_5$) des Gelenkversatzes ist, $d_5$ die Länge des Gelenkversatzes ist und $0 \leq \alpha_4^{\infty} \leq 180°$; und

Positionieren der restlichen einen ($Z_3$) der drei Drehachsen der Gelenkverbindung des Gelenkes derart, daß die Größe des Verdrehwinkels $\alpha_4$ innerhalb des Bereiches $| \alpha_5 | < \alpha_4 \leq \alpha_4^{\infty}$ oder $(180° - \alpha_4^{\infty}) \leq \alpha_4 < (180° - | \alpha_5 |)$ liegt, wobei die Vorzeichen der Verdrehwinkel $\alpha_4$ und $\alpha_5$ mit den Richtungen des Anfangskoordinatensystems in Übereinstimmung sind.

6. Verfahren nach Anspruch 5, wobei die Größe des Verdrehwinkels $\alpha_4$ gleich dem Verdrehwinkel $\alpha_4^{\infty}$ ist.

7. Verfahren nach Anspruch 5, wobei die Größe des Verdrehwinkels $\alpha_4$ gleich 180° minus $\alpha_4^{\infty}$ ist.

## Revendications

1. Procédé d'orientation de trois axes de rotation ($Z_3$, $Z_4$, $Z_5$) d'articulation d'un poignet de robot s'étendant depuis l'extrémité d'un bras supérieur d'un robot et comportant un décalage du fait duquel lesdits trois axes de rotation ($Z_3$, $Z_4$, $Z_5$) d'articulation ne coïncident pas en un point, dans lequel $\alpha_4$ et $\alpha_5$ sont des angles de torsion entre lesdits trois axes de rotation ($Z_3$, $Z_4$, $Z_5$) d'articulation, ledit procédé comprenant :

le positionnement de deux ($Z_3$, $Z_4$) desdits trois axes de rotation d'articulation de sorte que ledit angle de torsion $\alpha_4$ soit à l'intérieur de la plage de $0 \leq | \alpha_4 | \leq 180°$;
caractérisé en ce que ledit procédé comprend en outre :

la détermination d'un angle de torsion $\alpha_4^0$ en utilisant les formules suivantes :

$$(\ell_3^0)^2 = (\ell_3)^2 + (d_5)^2 - 2 \times \ell_3 \times d_5 \times \cos(180° - \alpha_4)$$

$$\alpha_4^0 = a\cos\left(\frac{(\ell_3^0)^2 + (d_5)^2 - (\ell_3)^2}{2 \times \ell_3^0 \times d_5}\right)$$

où $\ell_3$ est la distance d'un axe de rotation ($Z_2$) d'articulation dudit bras supérieur de robot au commencement ($P_4$) dudit décalage de poignet, $d_5$ est la longueur dudit décalage de poignet, et $0 \leq \alpha_4^0 \leq 180°$ ; et le positionnement de celui qui reste ($Z_5$) desdits trois axes de rotation d'articulation dudit poignet de façon que l'amplitude dudit angle de torsion $\alpha_5$ soit à l'intérieur de la plage de $(2 \times \alpha_4^0 - | \alpha_4 |) < \alpha_5 < | \alpha_4 |$ ou $(180° - | \alpha_4 |) < \alpha_5 < (180° - 2 \times \alpha_4^0 + | \alpha_4 |)$, où les signes desdits angles de torsion $\alpha_4$ et $\alpha_5$ sont fonction des directions du système de coordonnées initial.

2. Procédé selon la revendication 1, dans lequel l'amplitude dudit angle de torsion $\alpha_5$ est égal audit angle de torsion $\alpha_4^0$.

3. Procédé selon la revendication 1, dans lequel l'amplitude dudit angle de torsion $\alpha_5$ est égal à $180° - \alpha_4^0$.

4. Procédé selon l'une quelconque des revendications 1 à 3, dans lequel l'amplitude dudit angle de torsion $\alpha_4$ est de 90°.

5. Procédé d'orientation de trois axes de rotation ($Z_3$, $Z_4$, $Z_5$) d'articulation d'un poignet de robot s'étendant depuis l'extrémité d'un bras supérieur d'un robot et comportant un décalage du fait duquel lesdits trois axes de rotation ($Z_3$, $Z_4$, $Z_5$) d'articulation ne coïncident pas en un point, dans lequel $\alpha_4$ et $\alpha_5$ sont des angles de torsion entre lesdits trois axes de rotation ($Z_3$, $Z_4$, $Z_5$) d'articulation, ledit procédé comprenant :

le positionnement de deux ($Z_4$, $Z_5$) desdits trois axes de rotation d'articulation de sorte que ledit angle de torsion $\alpha_5$ soit à l'intérieur de la plage de $0 \leq |\alpha_5| \leq 180°$ ;

caractérisé en ce que ledit procédé comprend en outre :

la détermination d'un angle de torsion $a_4^{00}$ en utilisant les formules suivantes :

$$(\ell_3)^2 = (\ell_3^0)^2 + (d_5)^2 - 2 \times \ell_3^0 \times d_5 \times \cos(\alpha_5)$$

$$\alpha_4^{00} = 180° - a\cos\left(\frac{(\ell_3)^2 + (d_5)^2 - (\ell_3^0)^2}{2 \times \ell_3 \times d_5}\right)$$

où $\ell_3^0$ est une longueur de liaison virtuelle entre un axe de rotation ($Z_2$) d'articulation dudit bras supérieur de robot et l'extrémité ($P_5$) dudit décalage de poignet, $d_5$ est la longueur dudit décalage de poignet, et $0 \leq \alpha_4^{00} \leq 180°$ ; et

le positionnement de celui qui reste ($Z_3$) desdits trois axes de rotation d'articulation dudit poignet de façon que l'amplitude dudit angle de torsion $\alpha_4$ soit à l'intérieur de la plage de $|\alpha_5| < \alpha_4 \leq \alpha_4^{00}$ ou $(180° - \alpha_4^{00}) \leq \alpha_4 < (180° - |\alpha_5|)$, où les signes desdits angles de torsion $\alpha_4$ et $\alpha_5$ sont fonction des directions du système de coordonnées initial.

6. Procédé selon la revendication 5, dans lequel l'amplitude dudit angle de torsion $\alpha_4$ est égal audit angle de torsion $\alpha_4^{00}$.

7. Procédé selon la revendication 5, dans lequel l'amplitude dudit angle de torsion $\alpha_4$ est égal à $180° - a_4^{00}$.

FIG. 1

FIG. 2

FIG. 3

FIG. 4

FIG. 5

FIG. 6

FIG. 7

FIG. 8

FIG.9

FIG.10